# EUROPÄISCHE PATENTSCHRIFT

(11) **EP 1 035 240 B1**
(45) Veröffentlichungstag und Bekanntmachung des Hinweises auf die Patenterteilung: **22.10.2003**
(21) Anmeldenummer: 00103217.6
(22) Anmeldetag: 17.02.2000
(51) Int. Cl.: D01H 4/10, G01M 1/34

(54) **Spinnrotor für Offene-end-Spinnmaschinen und Verfahren zur Herstellung des Spinnrotors**
Spinning rotor for open end spinning machines and method of manufacturing such a spinning rotor
Rotor à filer pour des machines à filer à extrémite libre et procédé de fabrication d'un tel rotor

(30) Priorität: 09.03.1999 DE 19910276
(43) Veröffentlichungstag der Anmeldung: 13.09.2000
(73) Patentinhaber: Saurer GmbH & Co. KG, 41069 Mönchengladbach (DE)
(72) Erfinder: Landolt, Claus-Dieter, 41179 Mönchengladbach (DE); Haaken, Dieter, 41812 Erkelenz (DE); Segura, Fernando, 41169 Mönchengladbach (DE); Bohne, Ralf, 41068 Mönchengladbach (DE)

(56) Entgegenhaltungen:
- DE-A- 19 755 060
- US-A- 3 935 746
- US-A- 4 150 530

## Beschreibung

Die Erfindung betrifft einen Spinnrotor für Offenend-Spinnmaschinen gemäß dem Oberbegriff des Anspruches 1 sowie ein Verfahren zur Herstellung des Spinnrotors gemäß dem Oberbegriff des Anspruches 7.

Bei schnell rotierenden Körpern wie zum Beispiel Spinnrotoren tritt eine Unwucht auf, wenn die Masse des Körpers so verteilt ist, daß der Schwerpunkt außerhalb der Drehachse liegt oder Dreh- und Trägheitsachse nicht zusammenfallen. Eine Unwucht führt bei der Rotation des Körpers zu unerwünschten Reaktionskräften, die unruhigen Lauf verursachen oder Schwingungen erregen, die insbesondere bei steigenden beziehungsweise hohen Drehzahlen oder in bestimmten Frequenzbereichen erheblich stärker werden. Dadurch können unerwünschte Folgen wie laute Geräusche, Fehlfunktionen, Verschleiß oder sogar Zerstörung auftreten, die die Wartung beziehungsweise den Austausch derartiger unwuchtbehafteter Bauelemente erfordern. Durch Wartungs- und Austauscharbeiten entstehen Kosten und Stillstandszeiten, und der Nutzungsgrad beziehungsweise die Produktivität der Maschine wird beeinträchtigt.

Um solche Nachteile zu vermeiden, wird bei schnell rotierenden Körpern üblicherweise ein dynamisches Auswuchten als Teil des Herstellprozesses durchgeführt, wobei der Massenausgleich des Körpers zum Beispiel in einigen Anwendungsfällen durch das Anbringen von Gewichten oder in den meisten Fällen durch Materialabtrag erfolgen kann.

Betriebsdrehzahlen von Spinnrotoren in Offenend-Spinnmaschinen betragen heute bereits über 100 000 U/min. Bei derartig hohen Drehzahlen werden Lagerung und Antrieb der Spinnrotoren bereits bei geringer Unwucht enormer Belastung, verbunden mit den vorhergehend geschilderten Nachteilen, ausgesetzt. Es ist daher bekanntermaßen unumgänglich, Spinnrotoren nicht nur mit höchster Präzision in der Formgebung zu fertigen, sondern diese sämtlich auch sorgfältig auszuwuchten. Nach dem bekannten Stand der Technik wird zum Auswuchten des Spinnrotors stets ein Materialabtrag durch Abschleifen an seinem Außenumfang vorgenommen. Üblicherweise erfolgt das Abschleifen beim Rotorteller an der Endkante des Bundes und am Außenumfang an der Stelle des größten Umfanges. Derartiges Auswuchten ist zum Beispiel aus der EP 0 099 490 B1 sowie der DE 43 12 365 A1 bekannt.

Das bereits als Stand der Technik in der EP 0 099 490 B1 beschriebene Auswuchten geschieht durch Abschleifen des Spinnrotors an seinem Außenumfang. Eine Materialabtragung wirkt sich dort zwar besonders stark aus, es wird jedoch insbesondere bei spanlos geformten Offenend-Spinnrotoren die relativ dünne Wand an einer kritischen Stelle geschwächt. Es wird schon in der EP 0 099 490 B1 ausdrücklich darauf hingewiesen, daß eine solche Schwächung im Hinblick auf die heute üblichen Rotordrehzahlen unbedingt zu vermeiden ist. Das weiterhin offenbarte Auswuchtverfahren, bei dem der Massenausgleich in einem ersten Herstellungsschritt zunächst durch Ausstanzen eines Loches aus dem Boden des Topfes beim Drückvorgang erfolgt, wobei das Loch in einem späteren Herstellungsschritt in einem für den Massenausgleich ausreichenden Maße vergrößert wird, ist aufwendig, zeitraubend und insbesondere beschränkt auf Spinnrotoren, die durch plastische Verformung zum Beispiel aus Blech hergestellt werden.

Die DE 43 12 365 A1 beschreibt das Auswuchten durch Anschleifen des Bundes. Als nachteilig wird dabei besonders der erforderliche beträchtliche Aufwand beim Auswuchten hervorgehoben.

Die DE 43 34 064 A1 offenbart ein Wuchtverfahren, bei dem das Auswuchten mittels eines pulsierenden Laserstrahles erfolgt. Die Pulsfrequenz des Laserstrahles ist zur Drehgeschwindigkeit des in der Unwucht-Meßvorrichtung während des Auswuchtvorganges in Drehbewegung versetzten Rotors synchron und die Synchronisierung erfolgt auf solche Weise, daß der Laser Material abträgt, wenn der übergewichtige Bereich des Rotors am Laserstrahl-Auftreffpunkt an der Rotormantelfläche vorbeidreht. Für ein präzises Auswuchten, das den Ansprüchen an die für hohe Drehzahlen des auszuwuchtenden Körpers erforderliche Wuchtgüte genügt, arbeitet dieses Verfahren jedoch nicht genau genug. Eine exakte Führung des Rotors bei der Drehbewegung während des Auswuchtvorganges ist unbedingt Voraussetzung für präzises Auswuchten mit einem solchen Verfahren, aber entweder zu ungenau oder außerordentlich aufwendig und damit zu kostspielig.

Der Erfindung liegt die Aufgabe zugrunde, im Hinblick auf das Auswuchten von Offenend-Spinnrotoren Verbesserungen zu erzielen.

Diese Aufgabe wird erfindungsgemäß durch einen Spinnrotor mit den Merkmalen des Anspruches 1 und durch ein Verfahren zur Herstellung eines Spinnrotors mit den Merkmalen des Anspruches 7 gelöst.

Vorteilhafte Ausgestaltungen der Erfindung sind Gegenstand der Unteransprüche.

Ein erfindungsgemäßer Spinnrotor mit einem Rotorteller, der mindestens ein Kennzeichen trägt, das durch Materialabtragung auf der Außenfläche erzeugt ist und das gezielt so ausgebildet ist, daß es durch Lage, Fläche und Abtragtiefe dem Massenausgleich des Spinnrotors dient, zeichnet sich durch eine hohe Wuchtgüte aus. Das eingebrachte Kennzeichen stellt vorteilhaft eine präzise dosierte Materialabtragung dar. Die erhöhte Wuchtgüte führt zu größerer Laufruhe und kann damit die Funktionseigenschaften, insbesondere die Betriebssicherheit des Spinnrotors und dadurch die Produktivität der Spinnstelle verbessern. Der erfindungsgemäße Spinnrotor benötigt neben dem Kennzeichen keine zusätzliche Materialabtragstelle zum Massenausgleich wie beispielsweise eine störende Einkerbung oder Einbuchtung, die zu unerwünschter und nachteiliger Beeinflussung der Grenzschichtströmung oder zu einer unzulässigen Schwächung der Festigkeit des Spinnrotors führen kann. Durch die Verteilung der Materialabtragung auf die gesamte Fläche des Kennzeichens kann die Abtragtiefe äußerst gering gehalten sein und wirkt sich damit strömungsgünstig bei hohen Drehzahlen des Spinnrotors aus. Ein strömungsgünstiger erfindungsgemäßer Spinnrotor senkt insbesondere bei derartigen hohen Drehzahlen den Energieverbrauch, ist aufgrund der Minderung von Aufwand und Zeit bei der Herstellung kostengünstig und ermöglicht so bei der üblichen Ausführung der Offenend-Spinnmaschinen mit einer Vielzahl von Spinnstellen eine beträchtliche Kostenersparnis.

Das durch Materialabtragung erzeugte Kennzeichen ist beständig und gut erkennbar. Es kann der Identifizierung und/oder der Information dienen. Zu diesem Zweck ist das Kennzeichen bevorzugt eine Beschriftung oder ein Bildzeichen oder alternativ eine Kombination von Beschriftung und Bildzeichen.

Das Kennzeichen ist vorteilhaft auf dem Außenumfang des Bundes des Spinnrotors angeordnet, vorzugsweise auf dem zylinderförmigen Abschnitt des Bundes. An dieser Stelle wirkt sich die Materialabtragung sehr effektiv als Massenausgleich aus, ohne dabei wie eine zum Beispiel sonst nach dem Stand der Technik übliche Einkerbung am Außenradius des größten Durchmessers des Rotortellers den Luftwiderstand oder die Festigkeit des Spinnrotors nachteilig zu beeinflussen. Mit der wirkungsvollen Position des Kennzeichens auf dem zylinderförmigen Abschnitt des Bundes kann die sonst beim Auswuchten sowohl am Außenradius des größten Durchmessers des Rotortellers als auch an der schaftseitigen Kante des Bundes übliche Materialabtragung ersetzt werden. Eine derartige an zwei axial beabstandeten Stellen durch Schleifen erzeugte doppelte Materialabtragung beim Auswuchten wird bisher oft als unerläßlich angesehen.

Das Kennzeichen ist vorteilhaft mit sauberer und gleichmäßiger Ausbildung der Form und des Grundes durch einen Laserstrahl erzeugt.

Bei der Herstellung eines Spinnrotors mit mindestens einem Kennzeichen auf dem Rotorteller, das nach der in bekannter Weise erfolgten Formgebung durch Materialabtragung auf der Außenfläche erzeugt und gezielt so ausgebildet ist, daß es durch Lage, Fläche und Abtragtiefe dem Massenausgleich des Spinnrotors dient, kann das Erzeugen einer Kennzeichnung gleichzeitig mit dem unumgänglichen Massenausgleich beim Auswuchten in einem Arbeitsgang erfolgen. Dies ermöglicht eine beträchtliche Zeitersparnis und eine außerordentlich genau dosierbare Materialabtragung.

Die Materialabtragung erfolgt bevorzugt mittels Laserstrahl, der über das zu erzeugende Kennzeichen geführt wird und eine saubere und gleichmäßige Ausführung der Form und des Grundes des Kennzeichens erlaubt. Dazu wird die Richtung des Laserstrahls vorzugsweise von mindestens einem Ablenkmittel, insbesondere einer Optik, einfach und präzise gelenkt. Die Materialabtragung ist mittels Laserstrahl exakt dosierbar, reproduzierbar und als automatisierter Vorgang durchführbar.

Vorzugsweise wird ausgehend von der Größe der Abtragfläche des Kennzeichens die Abtragtiefe berechnet, die erforderlich ist, um den Massenausgleich zu erzielen. Vorteilhaft wird dabei die Abtragtiefe jeweils stufenweise vergrößert. Damit wird für gleiche Rotortypen ein gewünscht einheitliches Erscheinungsbild des Serienproduktes Spinnrotor erreicht und der erforderliche Rechenaufwand verringert sich deutlich, da die Berechnung einfacher und schneller erfolgen kann.

Eine weitere Vereinfachung und beträchtliche Beschleunigung bei der Bestimmung der Abtragtiefe wird dadurch erzielt, daß für unterschiedliche Kennzeichen und Unwuchtwerte die jeweilige Verknüpfung von Form, Fläche und Abtragtiefe tabellarisch abgelegt ist und abgefragt wird. Insbesondere abgestufte Abtragtiefen erleichtern die Zuordnung, begrenzen die Menge der zu speichernden Daten und verbessern die Wiederverwendungsmöglichkeit. Ein Berechnen der Abtragtiefe kann dabei ganz oder zumindest weitgehend entfallen. Das Bestimmen der Materialabtragung kann sich auf die Zuordnung von von Form, Fläche und Abtragtiefe eines Kennzeichens zu einer ermittelten Unwuchtgröße beschränken.

Bevorzugt wird das Kennzeichen zumindest teilweise als Beschriftung oder Bildzeichen ausgeführt und dadurch die Zahl der abzuspeichernden Zeichen begrenzt und überschaubar. Die Identifizierung oder die Information kann über bekannte Formen oder Informationsträger erfolgen.

Wird die Leistung des Laserstrahls vorteilhaft regelmäßig in vorbestimmten Zeitintervallen einem vorbeugenden oder zustandsabhängigen Einmessvorgang unterworfen und werden dabei festgestellte Leistungsabweichungen vom vorgegebenen Sollwert wieder durch eine von der Steuerungseinrichtung vorgenommene Regelung ausgeglichen, bleibt die Leistung des Laserstrahls derart konstant, daß die Materialabtragung stets unter reproduzierbaren Bedingungen ablaufen kann.

Das Verfahren gemäß den Merkmalen des Anspruchs 16 stellt unter teilweiser Einbeziehung bekannter Verfahrensschritte des Auswuchtens eine besonders vorteilhafte Herstellung eines erfindungsgemäßen Spinnrotors dar. Es läuft schnell und sicher ab, führt zu Spinnrotoren mit hoher Wuchtgüte, benötigt nur geringen Bedienungsaufwand, da es automatisierbar ist, und besitzt eine hohe Reproduzierbarkeit ohne Beeinträchtigung durch manuelle Fehlerquellen oder Unzulänglichkeiten. Das erzeugte Kennzeichen ist beständig und deutlich sowie unverwechselbar zu erkennen. Insbesondere das Erzeugen mindestens eines Kennzeichens gleichzeitig mit dem unumgänglichen Massenausgleich beim Auswuchten in einem Arbeitsgang ermöglicht eine signifikante Minderung des Herstellungsaufwandes und eine äußerst genau dosierbare Materialabtragung und damit die hohe Wuchtgüte. Ein auf diese Weise hergestellter Spinnrotor weist verbesserte Betriebseigenschaften auf, führt zu einer Erhöhung der Sicherheit und des Nutzungsgrades an der Spinnstelle, zu einer Senkung der Kosten und zu einer Steigerung der Produktivität.

Weitere Einzelheiten der Erfindung sind den Figuren entnehmbar.

Es zeigt:
- Fig. 1: eine Prinzipdarstellung einer Auswuchtvorrichtung zur Durchführung des erfindungsgemäßen Verfahrens,
- Fig. 2: einen Rotorteller mit Kennzeichen.

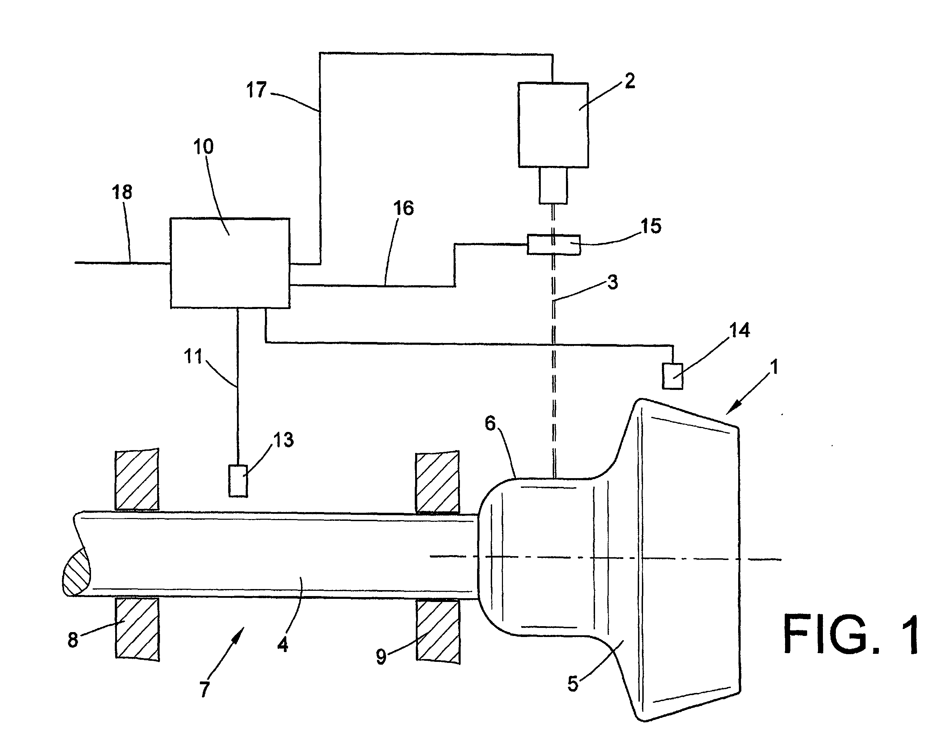

Mit der in Fig. 1 dargestellte Auswuchtvorrichtung ist das Auswuchten eines Spinnrotors 1 durch Materialabtragung mittels eines von einer Lasereinrichtung 2 emittierten Laserstrahls 3 durchführbar, wobei die Materialabtragung gleichzeitig dem Einbringen einer Kennzeichnung dient. Der Spinnrotor 1 besteht aus einem Rotorschaft 4 und einem Rotorteller 5, der einen Bund 6 aufweist. Der Rotorteller 5 ist über den Bund 6 mit dem Rotorschaft 4 auf bekannte Weise fest verbunden. Der mittels einer in ebenfalls bekannter Weise erfolgten Formgebung zum Auswuchten vorbereitete Spinnrotor 1 wird in einer Aufnahme 7 drehbar gelagert. Dazu weist die Aufnahme 7 zwei Lagerstellen 8,9 auf. Das dem Rotorteller 5 gegenüberliegende Ende des Rotorschaftes 4 ist von einer bei Auswuchtvorrichtungen an sich bekannten Einspannvorrichtung, die aus Vereinfachungsgründen nicht näher dargestellt und erläutert ist, lösbar gehaltert und in gesteuerte Drehbewegung versetzbar. Alternativ kann die Aufnahme für den Spinnrotor 1 auch nach dem Prinzip der an Spinnstellen von Offenend-Spinnmaschinen üblichen und bekannten Laufscheibenlagerung ausgebildet sein und dem Spinnrotor 1 die Drehbewegung über ein Reibrad erteilt werden. Die in Fig. 1 dargestellte Auswuchtvorrichtung weist eine Steuerungseinrichtung 10 auf, mit der Daten verarbeitbar und speicherbar sind und mit der nicht nur die Materialabtragung mittels Laserstrahl 3, sondern der gesamte Auswuchtvorgang steuerbar ist. Die Steuerungseinrichtung 10 ist über Leitungen 11,12 mit Sensoren 13,14 zur Detektion von durch Unwucht bei der Drehbewegung des Spinnrotors 1 verursachten Schwingungen oder zur Detektion von Markierungen zur Ermittlung der Winkellage verbunden. Die Sensoren 13,14 können alternativ auch an anderen Stellen positioniert sein. Die Lasereinrichtung 2 ist so angeordnet, daß sich der in der Aufnahme 7 gelagerte Spinnrotor 1 mit seiner der Lasereinrichtung 2 zugewandten Außenfläche des Rotortellers 5 im Wirkungsbereich des Laserstrahls 3 befindet. Ein als Optik ausgebildetes Ablenkmittel 15 beeinflußt auf bekannte Weise die Richtung des Laserstrahls 3 und wird über die Leitung 16 von der Steuerungseinrichtung 10 gesteuert. Die Leitung 17 verbindet Steuerungseinrichtung 10 und Lasereinrichtung 2. Die Steuerungseinrichtung 10 ist über die Leitung 18 mit der im Vorhergehenden erwähnten Einspannvorrichtung verbunden und steuert diese ebenfalls. Über die Leitungen 11,12,16,17,18 kann nicht nur die Steuerung, sondern auch die, falls erforderlich auch regelbare, Energieversorgung aus einer aus Vereinfachungsgründen nicht dargestellten Spannungsquelle erfolgen, an die auch die Einspannvorrichtung angeschlossen ist.

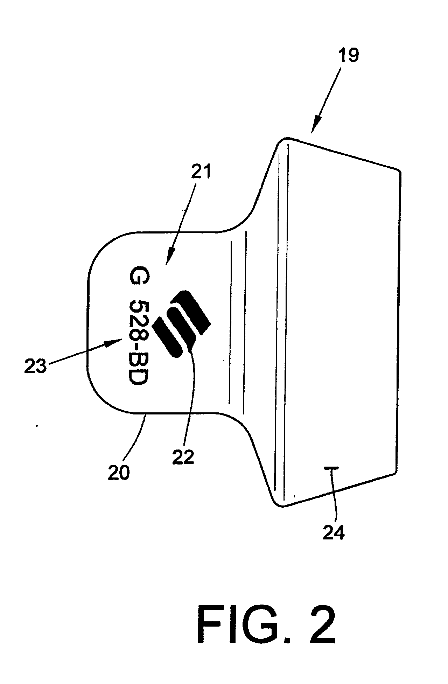

Der in Fig. 2 dargestellte Rotorteller 19 eines Spinnrotors weist auf der Außenfläche des zylinderförmigen Abschnittes seines Bundes 20 ein erfindungsgemäß durch Materialabtragung mittels Laserstrahl 3 erzeugtes Kennzeichen 21 auf, das aus einem Bildzeichen 22 und einer Beschriftung 23 besteht. Die Markierung 24 ist ebenfalls mittels Laserstrahl 3 erzeugt und kann auch an einer anderen Stelle der Außenfläche des Rotortellers 19 aufgebracht sein, soweit diese Stelle vom Laserstrahl 3 in der Auswuchtvorrichtung erfasst werden kann.

### Beschreibung der Verfahrensschritte:

Der in bekannter Weise zum Beispiel durch spanabhebende Bearbeitung erzeugte und für das Auswuchten vorbereitete Spinnrotor 1 wird in die Aufnahme einer mit Laserstrahl arbeitenden Auswuchtvorrichtung eingelegt. Das dem Rotorteller 5 gegenüberliegende Ende des Rotorschaftes 4 ist von einer bekannten Einspannvorrichtung lösbar und drehbar gehaltert. Mittels Laserstrahl 3 wird eine Markierung 24 an einer vorbestimmten Stelle auf der Außenfläche des Rotortellers 5 aufgebracht, wobei Stärke und Dauer der Einwirkung des Laserstrahls 3 so gesteuert sind, daß die Markierung 24 nicht durch Materialabtragung, sondern lediglich durch eine erkennbare Veränderung des Reflexionsverhaltens der Oberfläche des Rotortellers 5 erzeugt werden kann. Die Markierung 24 dient der Detektion der Winkelstellung des Spinnrotors oder auch zusätzlich der Drehzahlmessung und kann wie im Ausführungsbeispiel aus einem Strich bestehen. Die Lage der Markierung 24 beziehungsweise das Passieren eines vorbestimmten Meßpunktes wird zu diesem Zweck von einer aus Vereinfachungsgründen nicht dargestellten, in an sich bekannter Weise funktionierenden Sensoreinrichtung detektiert und die Meßdaten an die Steuerungseinrichtung 10 übermittelt. Anschließend wird der Spinnrotor 1 in eine Drehbewegung mit von der Steuerungseinrichtung 10 gesteuerter Meßdrehzahl versetzt und anhand der von den Sensoren 13,14 detektierten und durch die Unwucht verursachten Schwingungen auf bekannte Weise die Größe und die Winkellage der Unwucht von der Steuerungseinrichtung 10 der Auswuchtvorrichtung ermittelt. Zum Beispiel beträgt die Winkellage der Unwucht 312,5° und die Unwuchtmasse 35 mg. Unwuchten von Spinnrotoren vor dem Auswuchten liegen üblicherweise zwischen 20 bis 50 mg und können in Einzelfällen bis zu 100 mg betragen. Aufgrund der ermittelten Winkellage der Unwucht wird der Spinnrotor 1 so gedreht, daß die Unwucht auf die Lasereinrichtung 2 gerichtet ist. Die genaue Winkellage des Spinnrotors 1 richtet sich nach Form, Größe und Tiefe der als Massenausgleich wirkenden Abtragung zur Erzeugung des vorbestimmten Kennzeichens 21. Die Steuerung der Auswuchtvorrichtung berechnet unter Verwendung spinnrotorspezifischer Werte, wie zum Beispiel der Dichte des Rotorwerkstoffes oder der Form beziehungsweise den Maßen des Spinnrotors 1, das Volumen des abzutragenden Materials und bestimmt die Lage, Form und Tiefe des zum Massenausgleich erforderlichen Kennzeichens. Bei der Bestimmung der Abtragtiefe bedient sich die Steuerungseinrichtung 10 eines Datenspeichers, in dem für unterschiedliche Kennzeichen und Unwuchtwerte die jeweilige Verknüpfung von Form, Fläche und Abtragtiefe tabellarisch abgelegt ist. Die Abtragtiefe ist dabei in Stufen von 0,02 mm unterteilt. Es können alternativ jedoch auch andere Abstufungen gewählt werden. Die Stärke und Dauer der Lasereinwirkung auf die Oberfläche des Spinnrotors wird ebenfalls von der Steuerungseinrichtung 10 auf das abzutragende Material abgestimmt. Als Unwuchtgrößen sind Werte von 5 mg, 10 mg, 15 mg, 20 mg usw. abgelegt. Zwischenwerte können gegebenenfalls durch Interpolation ermittelt werden. Der nach dem Einschalten emittierte Laserstrahl 3 trifft auf die Oberfläche des zylinderförmigen Abschnitts des Bundes 6. Die Materialabtragung erfolgt im Stillstand des Spinnrotors 1. Zum Erzeugen der Form des Kennzeichens 21 wird die Richtung des Laserstrahls 3 von einem als Optik ausgebildeten Ablenkmittel 15 einfach, schnell und präzise gelenkt. Die Materialabtragung erfolgt schichtweise, wobei nacheinander jeweils sich über die gesamte Fläche des Kennzeichens 21 erstreckende Schichten abgetragen werden und so eine stetig gleichbleibende Materialabtragung sowie eine außerordentlich gleichmäßige Oberfläche des Grundes des Kennzeichens 21 erzielt wird.

Für die Verfahrensschritte wird nur eine einzige Einspannung benötigt, in der der Spinnrotor 1 bis zum Abschluß des Auswuchtens eingespannt bleibt und diese dann gekennzeichnet und gewuchtet verläßt. Das erfindungsgemäße Verfahren verkürzt das Auswuchten derartig trotz verbesserter Wuchtgüte und Aufbringen einer Kennzeichnung, die bisher in vor- oder nachgeschalteten Arbeitsgängen vorgenommen wurde, daß im gleichen Zeitraum bis zu einer dreifachen Menge an fertiggewuchteten Spinnrotoren gegenüber einem herkömmlichen Verfahren erzeugt werden kann.

## Patentansprüche

1. Spinnrotor für Offenend-Spinnmaschinen, der einen Rotorteller (5, 19) mit Bund (6, 20) aufweist und für hohe Rotordrehzahlen geeignet ist,
**dadurch gekennzeichnet,**
**daß** der Rotorteller (5, 19) mindestens ein Kennzeichen (21) trägt, das durch Materialabtragung auf der Außenfläche erzeugt ist und daß das Kennzeichen (21) gezielt so ausgebildet ist, daß es durch Lage, Fläche und Abtragtiefe dem Massenausgleich des Spinnrotors (1) dient.

2. Spinnrotor nach Anspruch 1, **dadurch gekennzeichnet, daß** das Kennzeichen (21) zumindest teilweise eine Beschriftung (23) ist.

3. Spinnrotor nach Anspruch 1 oder 2, **dadurch gekennzeichnet, daß** das Kennzeichen (21) zumindest teilweise ein Bildzeichen (22) ist.

4. Spinnrotor nach einem der vorhergehenden Ansprüche, **dadurch gekennzeichnet, daß** das Kennzeichen (21) auf dem Außenumfang des Bundes (6, 20) angeordnet ist.

5. Spinnrotor nach Anspruch 4, **dadurch gekennzeichnet, daß** das Kennzeichen (21) auf dem zylinderförmigen Abschnitt des Bundes (6, 20) angeordnet ist.

6. Spinnrotor nach einem der vorhergehenden Ansprüche, **dadurch gekennzeichnet, daß** das Kennzeichen (21) durch einen Laserstrahl (3) erzeugt ist.

7. Verfahren zur Herstellung eines Spinnrotors nach Anspruch 1, bei dem nach der in bekannter Weise erfolgten Formgebung des Spinnrotors (1) die Winkellage und die Größe der Unwucht ermittelt wird, die für den Massenausgleich erforderliche Materialmenge bestimmt und eine Materialabtragung für den Massenausgleich in Abhängigkeit von der Winkellage erfolgt, **dadurch gekennzeichnet, daß** auf dem Rotorteller (5, 19) mindestens ein Kennzeichen (21) durch Materialabtragung auf der Außenfläche erzeugt wird und daß das Kennzeichen (21) dabei gezielt so ausgebildet wird, daß es durch Lage, Fläche und Abtragtiefe dem Massenausgleich des Spinnrotors (1) dient.

8. Verfahren nach Anspruch 7, **dadurch gekennzeichnet, daß** die Materialabtragung mittels Laserstrahl (3) erfolgt, der über das zu erzeugende Kennzeichen (21) geführt wird.

9. Verfahren nach einem der Ansprüche 7 bis 8, **dadurch gekennzeichnet, daß** der Laserstrahl (3) von mindestens einem Ablenkmittel (15), insbesondere einer Optik, in seiner Richtung gelenkt wird.

10. Verfahren nach einem der Ansprüche 7 bis 9, **dadurch gekennzeichnet, daß** ausgehend von der Größe der Abtragfläche des Kennzeichens (21) die Abtragtiefe berechnet wird, die erforderlich ist, um den Massenausgleich zu erzielen.

11. Verfahren nach Anspruch 10, **dadurch gekennzeichnet, daß** die Abtragtiefe jeweils stufenweise vergrößert wird.

12. Verfahren nach einem der Ansprüche 7 bis 10, **dadurch gekennzeichnet, daß** für unterschiedliche Kennzeichen (21) und Unwuchtwerte die jeweilige Verknüpfung von Form, Fläche und Abtragtiefe tabellarisch abgelegt ist und abgefragt wird.

13. Verfahren nach einem der Ansprüche 7 bis 12, **dadurch gekennzeichnet, daß** das Kennzeichen (21) zumindest teilweise als Beschriftung (23) ausgeführt wird.

14. Verfahren nach einem der Ansprüche 7 bis 13, **dadurch gekennzeichnet, daß** das Kennzeichen (21) zumindest teilweise als Bildzeichen (22) ausgeführt wird.

15. Verfahren nach einem der Ansprüche 7 bis 14, **dadurch gekennzeichnet, daß** die Leistung des Laserstrahls (3) regelmäßig in vorbestimmten Zeitintervallen einem vorbeugenden oder zustandsabhängigen Einmessvorgang unterworfen wird und festgestellte Leistungsabweichungen vom vorgegebenen Sollwert ausgeglichen werden.

16. Verfahren nach einem der Ansprüche 7 bis 14, **dadurch gekennzeichnet, daß** das Erzeugen des Kennzeichens (21) in folgenden Verfahrensschritten ausgeführt wird:
- der in bekannter Weise zum Auswuchten vorbereitete Spinnrotor (1) wird in die Aufnahme einer mit Laserstrahl (3) arbeitenden Auswuchtvorrichtung eingelegt und in Drehbewegung versetzt,
- mittels Laserstrahl (3) wird eine Kennzeichnung erstellt, die der Detektion der Winkelstellung des Spinnrotors (1) dient,
- die Unwucht des Spinnrotors (1) wird bei gesteuerter Meßdrehzahl gemessen,
- die Steuerungseinrichtung (10) der Auswuchtvorrichtung bestimmt Lage und Größe der Unwucht und berechnet unter Verwendung spinnrotorspezifischer Werte das Volumen des abzutragenden Materials,
- die Steuerung der Auswuchtvorrichtung bestimmt die Lage, Form und Tiefe des zum Massenausgleich erforderlichen Kennzeichens (21),
- der Spinnrotor (1) wird so gedreht, daß die Unwucht unter der Laserquelle im Wirkungsbereich des Lasers liegt,
- die Stärke und Dauer der Lasereinwirkung auf die Oberfläche des Spinnrotors (1) wird auf das abzutragende Material abgestimmt und erfolgt, während der Spinnrotor (1) stillsteht.

## Claims

1. Spinning rotor for open-end spinning machines, comprising a rotor cup (5, 19) with a collar (6, 20) and suitable for high rotor speeds, **characterised in that** the rotor cup (5, 19) carries at least one identification mark (21) produced by removal of material on the outer face and **in that** the identification mark 21 is deliberately formed in such a way that it is used for mass balance of the spinning rotor (1) owing to position, area and removal depth.

2. Spinning rotor according to claim 1, **characterised in that** the identification mark (21) is at least partially an inscription (23).

3. Spinning rotor according to claim 1 or 2, **characterised in that in that** the identification mark (21) is at least partially a graphic symbol (22).

4. Spinning rotor according to any one of the preceding claims, **characterised in that** the identification mark 21 is arranged on the outer periphery of the collar (6, 20).

5. Spinning rotor according to claim 4, **characterised in that** the identification mark (21) is arranged on the cylindrical portion of the collar (6, 20).

6. Spinning rotor according to any one of the preceding claims, **characterised in that** the identification mark (21) is produced by a laser beam (3).

7. Method for producing a spinning rotor according to claim 1, in which once the shaping of the spinning rotor (1) has taken place in known manner, the angular position and the size of the imbalance are ascertained, the material quantity required for mass balance is determine, and a removal of material takes place for mass balance as a function of the angular position, **characterised in that** at least one identification mark (21) is produced on the rotor cup (5, 19) by removal of material on the outer face, and **in that** the identification mark (21) is deliberately formed in such a way that it is used for mass balance of the spinning rotor (1) owing to position, area and removal depth.

8. Method according to claim 7, **characterised in that** the material is removed by a laser beam (3) which is guided by the identification mark (21) to be produced.

9. Method according to either of claims 7 to 8, **characterised in that** the laser beam (3) is guided with respect to its direction by at least one deflection means (15), in particular a lens system.

10. Method according to any one of claims 7 to 9, **characterised in that** the removal depth required to achieve the mass balance is calculated on the basis of the size of the removal area of the identification mark (21).

11. Method according to claim 10, **characterised in that** the removal depth is increased stepwise, in each case.

12. Method according to any one of claims 7 to 10, **characterised in that** the respective association of form, area and removal depth is tabulated and scanned, for different marks (21) and imbalance values.

13. Method according to any one of claims 7 to 12, **characterised in that** the identification mark (21) is at least partially formed as an inscription (23).

14. Method according to any one of claims 7 to 13, **characterised in that** the identification mark (21) is formed at least partially as a graphic symbol (22).

15. Method according to any one of claims 7 to 14, **characterised in that** the performance of the laser beam (3) is regularly subjected at predetermined time intervals to a preventive or condition-dependent measuring process and ascertained performance deviations from the predetermined desired value are compensated.

16. Method according to any one of claims 7 to 14, **characterised in that** the production of the identification mark (21) is carried out in the following method steps:
- the spinning rotor (1) prepared in known manner for balancing is placed in the receiver of a balancing device operating with a laser beam (3) and is set into rotation,
- an identification mark is produced by means of a laser beam (3) the mark being used for detecting the angular position of the spinning rotor (1),
- the imbalance of the spinning rotor (1) is measured at a controlled measuring speed,
- the control apparatus (10) of the balancing device determines the position and size of the imbalance and using spinning rotor-specific values, calculates the volume of material to be removed,
- the control system of the balancing device determines the position, shape and depth of the identification mark (21) required for mass balance,
- the spinning rotor (1) is rotated in such a way that the imbalance is positioned under the laser source in the action region of the laser,
- the strength and duration of laser action on the surface of the spinning rotor (1) is matched to the material to be removed and takes place while the spinning rotor (1) is stationary.

## Revendications

1. Rotor de filage pour métier à filer à fibre libérée, qui présente un disque de rotor (5, 19) à embase (6, 20) et qui est adapté à des vitesses de rotation élevées, **caractérisé en ce que** le disque de rotor (5, 19) porte au moins une marque (21) qui est réalisée sur la surface extérieure par enlèvement de matière, et **en ce que** la marque (21) est réalisée à dessein de telle manière qu'elle serve de par sa position, sa surface et sa profondeur d'enlèvement de masse d'équilibrage au rotor de filage (1).

2. Rotor de filage selon la revendication 1, **caractérisé en ce que** la marque (21) est au moins en partie une inscription (23).

3. Rotor de filage selon la revendication 1 ou 2, **caractérisé en ce que** la marque (21) est au moins en partie un symbole graphique (22).

4. Rotor de filage selon l'une des revendications précédentes, **caractérisé en ce que** la marque (21) est placée sur le pourtour extérieur de l'embase (6, 20).

5. Rotor de filage selon la revendication 4, **caractérisé en ce que** la marque (21) est placée sur le segment cylindrique de l'embase (6, 20).

6. Rotor de filage selon l'une des revendications précédentes, **caractérisé en ce que** la marque (21) est réalisée à l'aide d'un rayon laser (3).

7. Procédé pour fabriquer un rotor de filage selon la revendication 1, selon lequel, après formage d'une manière connue en soi du rotor de filage (1), on calcule la position angulaire et l'ampleur du déséquilibre qui déterminent la quantité de matière nécessaire pour équilibrer les masses, et on procède à un enlèvement de matière pour équilibrer les masses en fonction de la position angulaire, **caractérisé en ce que** l'on réalise sur le disque du rotor (5, 19) au moins une marque (21) par enlèvement de matière sur la surface extérieure, et **en ce que** la marque (21) est réalisée à dessein de telle manière qu'elle serve de par sa position, sa surface et sa profondeur d'enlèvement de masse d'équilibrage au rotor de filage (1).

8. Procédé selon la revendication 7, **caractérisé en ce que** l'enlèvement de matière s'effectue au moyen d'un rayon laser (3) que l'on passe sur la marque (21) à réaliser.

9. Procédé selon la revendication 7 ou 8, **caractérisé en ce que** la direction du rayon laser (3) est guidée par au moins un moyen de déviation (15), notamment une optique.

10. Procédé selon l'une des revendications 7 à 9, **caractérisé en ce qu'**en partant de la grandeur de la surface d'enlèvement de la marque (21), on calcule la profondeur d'enlèvement nécessaire pour obtenir l'équilibrage des masses.

11. Procédé selon la revendication 10, **caractérisé en ce que** l'on augmente toujours par paliers la profondeur d'enlèvement.

12. Procédé selon l'une des revendications 7 à 10, **caractérisé en ce que** l'association de forme, de surface et de profondeur d'enlèvement correspondant à différentes marques (21) et différents déséquilibres est entrée en mémoire sous forme de tableau et est appelée.

13. Procédé selon l'une des revendications 7 à 12, **caractérisé en ce que** la marque (21) est au moins en partie réalisée comme inscription (23).

14. Procédé selon l'une des revendications 7 à 13, **caractérisé en ce que** la marque (21) est au moins en partie réalisée comme symbole graphique (22).

15. Procédé selon l'une des revendications 7 à 14, **caractérisé en ce que** la puissance du rayon laser (3) est soumise régulièrement, à intervalles de temps prédéfinis, à un processus d'étalonnage préventif ou correctif, et **en ce que** des écarts de puissance par rapport à la valeur théorique sont compensés.

16. Procédé selon l'une des revendications 7 à 14, **caractérisé en ce que** la marque (21) est réalisée au cours des étapes suivantes :
- le rotor de filage (1) préparé d'une manière connue pour équilibrer est placé dans un dispositif d'équilibrage travaillant au rayon laser (3), et mis en rotation ;
- la marque qui sert à détecter la position angulaire du rotor de filage (1) est réalisée au moyen du rayon laser (3) ;
- le déséquilibre du rotor de filage (1) est mesuré tandis qu'il tourne à la vitesse réservée au mesurage ;
- le dispositif de commande (10) du dispositif d'équilibrage détermine la position et l'ampleur du déséquilibre et calcule le volume de matière à enlever en utilisant des valeurs spécifiques au rotor de filage ;
- la commande du dispositif d'équilibrage détermine la position, la forme et la profondeur de la marque (21) nécessaire pour équilibrer les masses ;
- on fait tourner le rotor de filage (1) de telle façon que le déséquilibre se situe dans la zone d'action du laser, sous la source du laser ;
- l'intensité et la durée de l'action du laser sur la surface du rotor de filage (1) sont coordonnées à la quantité de matière à enlever, et le laser entre en action tandis que le rotor de filage (1) est immobile.
